# EUROPEAN PATENT SPECIFICATION

(11) **EP 2 844 006 B1**
(45) Date of publication and mention of the grant of the patent: **01.08.2018**
(21) Application number: 12862079.6
(22) Date of filing: 14.12.2012
(51) Int. Cl.: H04W 52/02, H04W 76/28, H04W 84/12, H04W 84/18

(54) **METHOD, DEVICE AND SYSTEM FOR SETTING MAXIMUM STANDBY DURATION OF WIRELESS LOCAL AREA NETWORK STATION**
VERFAHREN, VORRICHTUNG UND SYSTEM ZUR EINSTELLUNG DER MAXIMALEN BEREITSCHAFTSBETRIEBSDAUER EINER WLAN-STATION
PROCÉDÉ, DISPOSITIF ET SYSTÈME DE SPÉCIFICATION D'UNE DURÉE MAXIMALE D'ATTENTE D'UNE STATION DE RÉSEAU LOCAL SANS FIL

(30) Priority: 31.12.2011 CN 201110458391
(43) Date of publication of application: 04.03.2015
(73) Proprietor: ZTE Corporation, Shenzhen, Guangdong 518057 (CN)
(72) Inventor: WANG, Lin, Shenzhen, Guangdong 518057 (CN); ZHANG, Dezhi, Shenzhen, Guangdong 518057 (CN); ZHANG, Junjian, Shenzhen, Guangdong 518057 (CN); ZHANG, Boshan, Shenzhen, Guangdong 518057 (CN)
(74) Representative: Onsagers AS
(86) International application number: PCT/CN2012/086623
(87) International publication number: WO 2013/097617

(56) References cited:
- CN-A- 101 331 439
- CN-A- 102 076 067
- CN-A- 102 196 499
- US-A1- 2008 123 577
- MINYOUNG PARK (INTEL CORP): "Low Power Capability Support for 802.11ah ; 11-11-0060-01-00ah-low-power-capability-su pport-for-802-11ah", IEEE SA MENTOR; 11-11-0060-01-00AH-LOW-POWER-CAPABILITY-SU PPORT-FOR-802-11AH, IEEE-SA MENTOR, PISCATAWAY, NJ USA, vol. 802.11ah, no. 1, 15 January 2011 (2011-01-15), pages 1-7, XP068035450, [retrieved on 2011-01-15]
- ROJAN CHITRAKAR (PANASONIC SINGAPORE): "Extended Sleep mode for battery powered STAs ; 11-12-0656-01-00ah-extended-sleep-mode-for -battery-powered-stas", IEEE SA MENTOR; 11-12-0656-01-00AH-EXTENDED-SLEEP-MODE-FOR -BATTERY-POWERED-STAS, IEEE-SA MENTOR, PISCATAWAY, NJ USA, vol. 802.11ah, no. 1, 17 September 2012 (2012-09-17), pages 1-17, XP068039144, [retrieved on 2012-09-17]

## Description

### Field of the Invention

The present invention relates to the field of communications, and in particular to a method, a device, a device and a system for configuring the maximum idle period of a wireless local area network station.

### Background of the Invention

As the direct extension of a local area network, a Wireless Local Area Network (WLAN) includes an Access Point (AP) and a plurality of associated stations (STA). The development of the IEEE 802.11 standard family results in the current wide application of WLAN. After twenty years of development, the IEEE802.11 WLAN standard working group consummates a series of standard families, including great influential and widely applied 802.11a, 802.11b, 802.11g and 802.11n etc. standards.

In the conventional IEEE 802.11a/b/g/n systems, after associated with an AP, an STA enters into a sleep state and, as unaware of how long the sleep can be kept before it is disconnected with the AP, must wake up periodically to send a Keep-alive frame to the AP to make the AP reset an idle timer, which excessively consumes the power of the STA and occupies resources of the AP.

As a new recommended wireless network management standard, the IEEE 802.11v provides an important and efficient mechanism for simplifying network deployment and management, the mechanism including wireless terminal device control, network selection, network optimization and statistical data acquisition and monitoring. In a aspect of power saving, a series of management functions for enhancing power saving are recommended in the IEEE 802.11v standard, including Basic Service Set (BSS) Max Idle Period Management, WNM-Sleep mode, Traffic Filtering Service, TIM broadcasting, Directed Multicast Service, Flexible Multicast Service and so on, by means of which the power consumption of an STA is further reduced to prolong the service life of the battery of the STA.

The Maximum idle period management function of the IEEE 802.11v enables an AP to inform an associated STA of a maximum idle period during which the AP keeps associated with the STA even if the AP receives no frame from the STA (that is, the STA is in a sleep state), thus avoiding the periodical wakeup and Keep-alive frame sending of the STA as well as resource and energy consumption of the AP on resetting an idle timer. At present, the maximum idle period supported by the 802.11v is defined by the 'Max Idle Period' sub-domain of a BSS maximum idle period element, the length is one byte (8 bits), the unit is 1000TU, thus, the maximum idle period is 1000*1024µs*65535=67107840000µs=1118.464 minutes ≈ 18.64 hours. For a application of the Internet of Things such as a wireless sensor, the IEEE 802.11 standard is standardizing the 802.11ah technology the working spectrum of which is below 1 GHz and not coincided with TV White Space (TVWS), the coverage distance of which is increased to nearly 1 km, and which supports a minimum rate of around 100Kbps and supports the synchronous access of at most nearly 6000 STAs. Powered by a battery and featured by periodically sending data in a small amount or sending burst data, most of wireless sensors further have a new requirement on the power-saving mechanism of the 802.11, for example, require for a longer idle period and a more flexible power-saving management mechanism.

Specifically, to support requirement of application of the Internet of Things on the ultra-long idle period of an STA, an AP may always keep associated with the STA if the BSS Max Idle Period management function of the 802.11v is not started, the connection with the STA, if not disconnected for a long time, means the consumption of extra Buffer/processing/ID resources by the AP on processing an idle STA, which causes the waste of resources.

If the BSS Max Idle Period management function of the 802.11v is started, the STA is disconnected with the AP if the STA sends no data within the currently defined MAX Idle Period, then the STA continues to monitor a Beacon frame and is re-associated with the AP again, this disconnection-and-reconnection approach is not suitable for some Internets of Things needing within online continuously, for example, an environmental alarm needs to be continuously connected with an AP to ensure the delivery of a sudden alarm message to the AP at the first time. A possible solution is that the STA sends a keep-alive frame to the AP within the time limit of 18.64h to inform the AP to reset an idle timer. For an application of the Internet of Things in which data is sent at intervals of several days or even several months, an STA repeatedly sends a keep-alive frame to an AP for many times, which excessively consumes the power of the STA and occupies the resources of the AP.

MINYOUNG PARK (INTEL CORP): "Low Power Capability Support for 802.11 ah; 11-11-0060-01-00ah-low-power-capability-support-for-802-11ah", XP 068035450 and US 2008/123577 provide respective technical solutions; however, the above mentioned problem still remains unsolved.

### Summary of the Invention

Aiming at a problem existing in the prior art that in a wireless local area network, as the maximum idle period supported by an AP is relatively small, after associated with the AP, an STA needing to stand by for a long time must repeatedly request for the re-association with the AP for many times so as to keep associated with the AP, which excessively consumes the power of the STA and occupies the resources of the AP, the present invention provides a method, a device and a system for configuring the maximum idle period of a wireless local area network station to address the foregoing problem.

In accordance with one aspect of the present invention, a method for configuring the maximum idle period of a wireless local area network station is provided, including following steps that: an AP receives an association request or a re-association request sent from a wireless local area network station (STA); the AP judges whether or not the STA supports an extended values of a standard maximum idle period according to a preset flag in the association request or re-association request, wherein the standard maximum idle period is the maximum idle period defined in the 802.11v; if the STA fails to support the extended values, the AP configures a maximum idle period of the STA within the standard maximum idle period; and if the STA supports the extended values, the AP configures the maximum idle period of the STA within the standard maximum idle period or the extended values of the standard maximum idle period according to an instruction from an upper layer.

Preferably, the preset flag is defined by a capability information element newly added in an association request or re-association request defined in the 802.11v to indicate whether or not the STA supports the extended values of the standard maximum idle period.

Preferably, the preset flag is defined by a reserved bit of an extended capability information element of the association request or re-association request defined in the 802.11v to indicate whether or not the STA supports the extended values of the standard maximum idle period.

Preferably, the step that the AP configures the maximum idle period of the STA within the extended values of the standard maximum idle period according to an instruction from an upper layer includes that: if the instruction from the upper layer instructs the AP to configure the extended values of the standard maximum idle period for the STA supporting the extended values of the standard maximum idle period, then the AP sends an association response or a re-association response indicating the extended values of the standard maximum idle period; and the STA sets the maximum idle period thereof according to the extended values of the standard maximum idle period.

Preferably, the extended values of the standard maximum idle period is indicated in the following way: a flag bit for indicating an unit granularity of the standard maximum idle period is added in the association response or re-association response defined in the 802.11v and a corresponding unit granularity is set according to the flag bit to indicate the extended values, or length of a flag bit contained in the association response or re-association response defined in the 802.11v for indicating the standard maximum idle period is increased and the value of the flag bit is set as the extended values.

Preferably, the step that the AP judges whether or not the STA supports the extended values of the standard maximum idle period according to the preset flag in the received association request includes: the AP judges whether or not the preset flag is a preset value, if soothe preset flag is a preset value, judges that the STA supports the extended values of the standard maximum idle period.

In accordance with another aspect of the present invention, a method for configuring the maximum idle period of a wireless local area network station is provided, including the following steps that: a station (STA) sends an association request or a re-association request to an AP, wherein the association request or re-association request carries a preset flag indicating whether or not the STA supports an extended values of a standard maximum idle period, and the standard maximum idle period refers to the maximum idle period defined in the 802.11v; the STA receives an association response or a re-association response sent from the AP; the STA acquires, according to the association response or re-association response, the maximum idle period configured by the AP for the STA, wherein if the preset flag indicates that the STA supports the extended values of the standard maximum idle period, then the maximum idle period acquired by the STA is the standard maximum idle period or the extended values of the standard maximum idle period, and if the preset flag indicates that the STA fails to support the extended values of the standard maximum idle period, then the maximum idle period acquired by the STA is the standard maximum idle period; and the STA configured the maximum idle period thereof according to the maximum idle period acquired.

Preferably, if the preset flag indicates that the STA supports the extended values of the standard maximum idle period, then the STA acquires the maximum idle period configured by the AP in the following way: the STA reads a flag bit contained in the association response or re-association response for indicating the unit granularity of the standard maximum idle period and acquires the maximum idle period configured by the AP for the STA according to the unit granularity and the standard maximum idle period, or the STA reads an extended flag bit contained in the association response for indicating the maximum idle period and acquires the maximum idle period configured by the AP for the STA.

Preferably, the STA carries the preset flag in the association request or re-association request in the following way: the STA defines the preset flag in a capability information element newly added in the association request or re-association request defined in the 802.11v to indicate whether or not the STA supports the extended values of the standard maximum idle period, or the STA defines the preset flag at the Reserved bit of the extended capability information element of the association request or re-association request defined in the 802.11v to indicate whether or not the STA supports the extended values of the standard maximum idle period.

In accordance with still another aspect of the present invention, a device for configuring the maximum idle period of a wireless local area network station is provided, including: a receiving module configured to receive an association request or a re-association request sent from an STA; a judgment module configured to judge whether or not the STA supports an extended values of a standard maximum idle period according to a preset flag in the received association request or re-association request, wherein the standard maximum idle period is the maximum idle period defined in the 802.11v; and a configuration module configured to configure the maximum idle period of the STA within the standard maximum idle period if the STA fails to support the extended values of the standard maximum idle period or configure the maximum idle period of the STA within the standard maximum idle period or the extended values of the standard maximum idle period according to an instruction from an upper layer if the STA supports the extended values of the standard maximum idle period.

Preferably, the preset flag is defined by a capability information element newly added in the association request or re-association request defined in the 802.11v to indicate whether or not the STA supports the extended values of the standard maximum idle period, or the preset flag is defined by the Reserved bit of the extended capability information element of the association request or re-association request defined in the 802.11v to indicate whether or not the STA supports the extended values of the standard maximum idle period.

Preferably, the configuration module includes: a configuration unit configured to configure a flag bit for indicating the unit granularity of the standard maximum idle period in the association response or re-association response defined in the 802.11v and set the flag bit to indicate the standard maximum idle period or the extended values of the standard maximum idle period, or configure an extended flag bit contained in the association response or re-association response for indicating the standard maximum idle period and set the flag bit as the standard maximum idle period or the extended values of the standard maximum idle period, wherein the length of the extended flag bit for indicating the standard maximum idle period is greater than that of the flag bit for indicating the standard maximum idle period in the association response or re-association response defined in the 802.11v; and a sending unit configured to send the association response or re-association response configured by the configuration unit to the STA.

In accordance with yet another aspect of the present invention, a device located in an STA for configuring the maximum idle period of a wireless local area network station is provided, including: a sending module configured to send an association request or a re-association request to an AP, wherein the association request or re-association request carries a preset flag indicating whether or not the STA supports an extended values of a standard maximum idle period, and the standard maximum idle period refers to the maximum idle period defined in the 802.11v; a receiving module configured to receive an association response or a re-association response sent from the AP; an acquisition module configured to acquire, according to the association response or re-association response, the maximum idle period configured by the AP for the STA, wherein if the preset flag indicates that the STA supports the extended values of the standard maximum idle period, then the maximum idle period acquired by the acquisition module is the standard maximum idle period or the extended values of the standard maximum idle period, and if the preset flag indicates that the STA fails to support the extended values of the standard maximum idle period, then the maximum idle period acquired by the acquisition module is the standard maximum idle period; and a configuration module configured to configure the maximum idle period of the STA according to the maximum idle period acquired by the acquisition module.

Preferably, if the preset flag indicates that the STA supports the extended maximum idle period, then the acquisition module acquires the maximum idle period configured by the AP in the following way: the acquisition module reads a flag bit contained in the association response or re-association response for indicating the unit granularity of the standard maximum idle period and acquires the maximum idle period configured by the AP for the STA according to the unit granularity and the standard maximum idle period, or the acquisition module reads an extended flag bit contained in the association response for indicating the maximum idle period and acquires the maximum idle period configured by the AP for the STA.

Preferably, the sending module carries the preset flag in the association request or re-association request in the following way: the sending module defines the preset flag in a capability information element newly added in the association request or the re-association request defined in the 802.11v to indicate whether or not the STA supports the extended standard maximum idle period, or the sending module defines the preset flag at the Reserved bit of the extended capability information element of the association request or the re-association request defined in the 802.11v to indicate whether or not the STA supports the extended standard maximum idle period.

In accordance with still yet another aspect of the present invention, a system for configuring the maximum idle period of a wireless local area network station is provided, including: an STA and an AP, wherein the STA includes the aforementioned device which is located at the side of the SAT for configuring the maximum idle period of a wireless local area network station; and the AP includes the aforementioned device for configuring the maximum idle period of the wireless local area network station.

With the present invention, an AP can configure a standard maximum idle period or an extended standard maximum idle period for a STA according to whether or not the STA supports an extended values of the standard maximum idle period and an instruction from an upper layer so that the STA needing to stand by for a long time can be associated with the AP for a longer time, thus preventing the STA from frequently sending a Keep-alive frame to the AP and consequentially saving the power of the STA and prolonging the service life of the battery of the STA, especially for an STA which needs to stand by for a long time and periodically sends data in a small amount or sends burst data, the present invention can effectively reduce the power consumption of the STA and prolong the service life of the battery of the STA.

### Brief Description of the Drawings

The accompanying drawings described here are provided for a better understanding of the present invention and form one part of the present invention, and the exemplary embodiments of the present invention and the description thereof are illustrative of the present invention but are not within construed as limiting the present invention. In the accompanying drawings:
Fig. 1 is a schematic diagram illustrating a system for configuring the maximum idle period of a wireless local area network station according to an embodiment of the present invention;
Fig. 2 is a block diagram illustrating the structure of a device for configuring the maximum idle period of a wireless local area network station according to an embodiment of the present invention;
Fig. 3 is a block diagram illustrating the structure of a configuration module according to embodiment 1 of the present invention;
Fig. 4 is a schematic diagram illustrating an EEE 802.11v BSS Max Idle Period Element according to a related technology;
Fig. 5 is a schematic diagram illustrating an EEE 802.11v Idle Option sub-domain according to a related technology;
Fig. 6 is a schematic diagram illustrating a BSS Max Idle Period Element according to a preferred implementation mode 1 of embodiments of the present invention;
Fig. 7 is a schematic diagram illustrating a BSS Max Idle Period Element according to an implementation mode 2 of embodiments of the present invention;
Fig. 8 is a schematic diagram illustrating an Idle Options sub-domain according to an implementation mode 2 of embodiments of the present invention;
Fig. 9 is a block diagram illustrating the structure of a device for configuring the maximum idle period of a wireless local area network station according to a preferred embodiment of the present invention;
Fig. 10 is a flowchart illustrating a method for configuring the maximum idle period of a wireless local area network station according to an embodiment of the present invention;
Fig. 11 is a schematic diagram illustrating the addition of a fourth-seventh bit 'Sensor Application' in an extended capability information element according to an embodiment of the present invention;
Fig. 12 is a schematic diagram illustrating newly added capability information elements according to an embodiment;
Fig. 13 is a block diagram illustrating the structure of another device for configuring the maximum idle period of a wireless local area network station according to an embodiment of the present invention;
Fig. 14 is a flowchart illustrating another method for configuring the maximum idle period of a wireless local area network station according to an embodiment of the present invention;
Fig. 15 is a flowchart illustrating a method for configuring the maximum idle period of a wireless local area network station according to an embodiment 1 of the present invention; and
Fig. 16 is a flowchart illustrating a method for configuring the maximum idle period of a wireless local area network station according to an embodiment 2 of the present invention.

### Detailed Description of the Embodiments

The present invention will be explained in detail hereinafter in conjunction with the drawings and the embodiments. What needs within explained is, if there is no conflict, the embodiments of the present invention and the characters in it can be combined with each other.

Aiming at the problem that in a wireless local area network, as the maximum idle period supported by an AP is relatively small, after associated with the AP, an STA needing to stand by for a long time must repeatedly request for the re-association with the AP for many times so as to keep associated with the AP, which excessively consumes the power of the STA and occupies the resources of the AP, a method, a device and a system for configuring the maximum idle period of a wireless local area network station are provided in the present invention. STAs are classified into STAs merely supporting a standard maximum idle period and STAs supporting an idle period longer than the standard maximum idle period according to a preset flag and an AP can configure a corresponding maximum idle period according to whether or not an STA supports an extended values of the standard maximum idle period and an instruction from an upper layer so that the STA is associated with the AP for a longer time and the times the STA sends a Keep-alive frame to the AP is reduced to reduce the power consumption of the STA and prolong the service life of the battery of the STA.

A system for configuring the maximum idle period of a wireless local area network STA is provided according to an embodiment of the present invention in which a flag indicating whether or not an STA supports an extended values of a standard maximum idle period is carried in an association request or a re-association request sent from the STA to an AP and the AP judges whether or not the maximum idle period supported by the STA is greater than the standard maximum idle period according to the flag and then configures the maximum idle period of the STA.

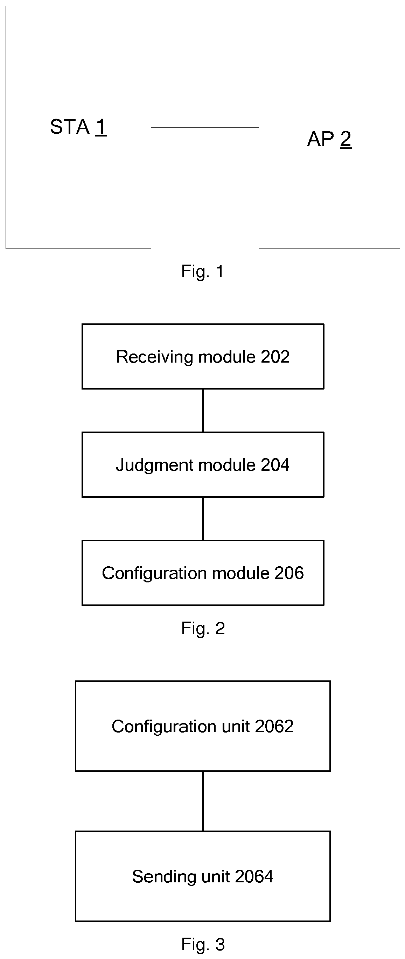

Fig. 1 is a schematic diagram illustrating a system for configuring the maximum idle period of a wireless local area network station according to an embodiment of the present invention, and as shown in Fig. 1, the system includes an STA 1 and an AP 2. The STA 1 is configured to send an association request or a re-association request to the AP 2, receive an association response or a re-association response sent from the AP 2 and acquire the maximum idle period configured by the AP 2 for the STA 1, wherein if the STA 1 supports an extended values of a standard maximum idle period, then the maximum idle period acquired by the STA 1 from the association response or re-association response is the standard maximum idle period or the extended values of the standard maximum idle period. The AP 2 is configured to receive the association request or the re-association request sent from the STA 1, judge whether or not the STA 1 supports the extended values of the standard maximum idle period according to a preset flag in the received association request or re-association request and configure the maximum idle period of the STA 1 within the standard maximum idle period or the extended values of the standard maximum idle period according to the result of the judgment and an instruction from an upper layer.

In embodiments of the present invention, the standard maximum idle period refers to the standard maximum idle period defined in the 802.11v.

With the system provided in the embodiment of the present invention, the AP 2 can configure the standard maximum idle period or the extended standard maximum idle period for an STA according to whether or not the STA supports the extended values of the standard maximum idle period and an instruction from an upper layer, so that the STA needing to stand by for a long time can be associated with the AP for a longer time, thus preventing the STA from frequently sending a Keep-alive frame to the AP and consequentially saving the power of the STA and prolonging the service life of the battery of the STA, especially for an STA which needs to stand by for a long time and periodically sends data in a small amount or sends burst data, the present invention can effectively reduce power consumption of the STA and prolong service life of the battery of the STA.

According to embodiments of the present invention, two devices for configuring a wireless local area network station are provided corresponding to the above system, wherein the two devices are located at the side of the STA 1 and the side of the AP 2, respectively. The device located at the side of the STA 1 can acquire the maximum idle period configured by the AP 2 for the device and configure the maximum idle period of the STA according to the maximum idle period configured by the AP 2 for the device. The device at the side of the AP 2 can judge whether or not the STA 1 supports an extended values of a standard maximum idle period according to a preset flag in an association request or re-association request sent from the STA 1 and configure a maximum idle period for the STA 1 according to the result of the judgment and an instruction from an upper layer.

The two devices for configuring a wireless local area network station are respectively described below.

### 1. Device located at the side of the AP 2 for configuring the maximum idle period of a wireless local area network station

Fig. 2 is a block diagram illustrating the structure of a device located at the side of the AP 2 for configuring the maximum idle period of a wireless local area network station according to an embodiment of the present invention, and as shown in Fig. 2, the device may include: a receiving module 202, a judgment module 204 and a configuration module 206. The receiving module 202 is configured to receive an association request or a re-association request sent from the STA 1; the judgment module 204 is coupled with the receiving module 202 and is configured to judge whether or not the STA 1 supports an extended values of a standard maximum idle period according to a preset flag in the received association request or re-association request, wherein the standard maximum idle period is the maximum idle period defined in the 802.11v; and the configuration module 206 is coupled with the judgment module 204 and is configured to configure the maximum idle period of the STA 1 within the standard maximum idle period if the STA 1 fails to support the extended values of the standard maximum idle period or configure the maximum idle period of the STA 1 within the standard maximum idle period or the extended values of the standard maximum idle period according to an instruction from an upper layer if the STA 1 supports the extended values of the standard maximum idle period.

With the above device provided in the embodiment of the present invention, after the receiving module 202 receives an association request or a re-association request from the STA 1, the judgment module 204 can judge whether or no the STA 1 supports an extended values of a standard maximum idle period according to a preset flag contained in the association request or re-association request for indicating whether or not the STA supports the extended values of the standard maximum idle period, and the configuration module 206 configures the maximum idle period of the STA within the standard maximum idle period or the extended values of the standard maximum idle period according to the result of the judgment and an instruction from an upper layer, thus reducing the times the STA needing to stand by for a long time sends a Keep-alive frame to an AP, reducing the power consumption of the STA and prolonging the service life of the battery of the STA.

In a preferred implementation mode of embodiments of the present invention, the preset flag is defined by a capability information element newly added in the association request or re-association request defined in the 802.11v to indicate whether or not the STA supports the extended standard maximum idle period, or the preset flag is defined by the reserved bit(s) of the extended capability information element of the association request or re-association request defined in the 802.11v to indicate whether or not the STA supports the extended values of the standard maximum idle period.

In a preferred embodiment of the present invention, when configuring the maximum idle period for the STA 1, the configuration module 206 of the AP 2 may instruct the STA 1 according to an association response or re-association response defined in the 802.11v. Thus, in a preferred implementation mode of embodiments of the present invention, as shown in Fig. 3, the configuration module 206 may include: a configuration unit 2062 and a sending unit 2064. The configuration unit 2062 is configured to configure a flag bit contained in an association response or a re-association response defined in the 802.11v for indicating unit granularity of the standard maximum idle period and set the flag bit to indicate the standard maximum idle period or the extended values of the standard maximum idle period, or configure an extended flag bit for indicating the standard maximum idle period in an association response or a re-association response and set the flag bit as the standard maximum idle period or the extended values of the standard maximum idle period, wherein length of the extended flag bit for indicating the standard maximum idle period is greater than that of the flag bit for indicating the standard maximum idle period in the association response or re-association response defined in the 802.11v. And the sending unit 2064 is configured to send the association response or re-association response configured by the configuration unit 2062 to the STA 1.

In the preferred implementation mode, when the maximum idle period configured by the AP 2 for the STA 1 is the extended values of the standard maximum idle period, the configuration unit 2062 can configure an association response or re-association response in two ways which will be described later, and two maximum idle period extension modes are described below, respectively.

### Mode 1

In mode 1 of preferred embodiments of the present invention, the standard maximum idle period is extended by increasing unit granularity of the standard maximum idle period. Specifically, the reserved field in the association response may be set as a flag bit to indicate the unit granularity of the standard maximum idle period, the flag bit is set within a preset value when the maximum idle period is set for an STA. For example, when the flag bit is set as '1', the unit granularity of the standard maximum idle period is extended by an integral times, if the unit granularity is 1000TU per bit before the extension, then the unit granularity may be 10000TU per bit after the extension.

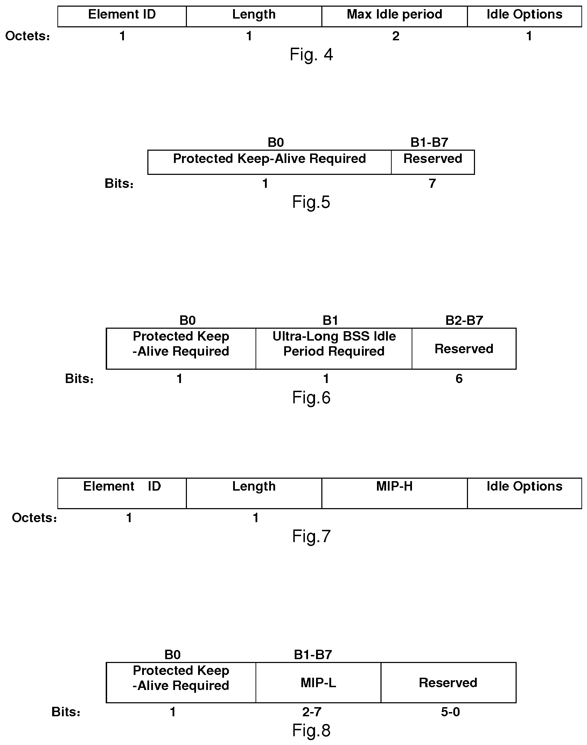

Specifically, for the BSS Max Idle Period of the IEEE 802.11v, the extension method may be as follows: a 'Ultra-Long BSS Idle Period Required' bit (as shown in Fig. 6) is added at the B1 bit (1 bit) of the Reserved field in the 'Idle Options' sub-domain of the original BSS Max Idle Period Element (format is shown in Fig. 4 and Fig. 5), if the B1 bit is 0, then the unit granularity of 1000 TU per bit of the 'Max Idle Period' sub-domain of the original BSS Max Idle Period Element keeps unchanged, if the B1 bit is 1, then it is appointed that the unit granularity of the 'Max Idle Period' sub-domain is increased by an integral times (for example, increased within 10000TU) to support an ultra-long idle period of several days or even several months or years.

### Mode 2

In mode 2 of preferred embodiments of the present invention, the standard maximum idle period is extended by increasing length of a flag bit contained in the association response for indicating the standard maximum idle period. Specifically, the flag bit for indicating the maximum idle period may be extended, for example, a field for indicating the maximum idle period may be added in an association response message.

Specifically, the BSS Max Idle Period of the IEEE 802.11v may be extended in the following way (by extending length of the maximum idle period): the 'Max Idle Period' sub-domain of the original BSS Max Idle Period Element is defined as eight high bits (MIP-H) of the maximum idle period value (as shown in Fig. 7), the B1 bit to B(2-7) bits (2-7 bits) of the Reserved field in the 'Idle Options' sub-domain are defined as 2-7 low bits (MIP-L) of the maximum idle period (as shown in Fig. 8), thereby increasing the bit amount of the maximum idle period from the original 8 bits to 10-15 bits to support an idle period of several days or even dozens of days.

By simply and conveniently realizing the extension of a preset standard maximum idle period, the methods described in the modes 1 and 2 realize the configuration of a greater maximum idle period for an STA and consequentially reduce the times the STA sends a Keep-live frame to an AP, reduce the power consumption of the STA and prolong the service life of the battery of the STA. However, embodiments of the present invention are not limited to the mentioned above, and the above two modes may be used synchronously in actual application, that is, the unit granularity and the length of the standard maximum idle period may be increased synchronously to extend the maximum idle period further.

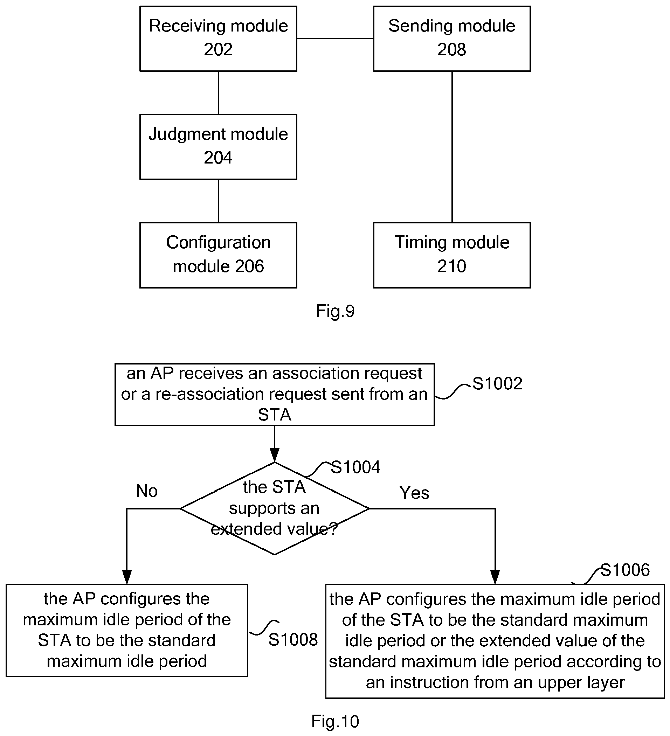

In preferred embodiments of the present invention, after receiving an association response or a re-association response, the STA 1 may send a sleep mode request to the AP1, and accordingly, the AP1 may receive the sleep mode request sent by the STA 1 and send a sleep mode response to the STA. Thus, in a preferred implementation mode of embodiments of the present invention, the receiving module 202 is further configured to receive the sleep mode request sent by the STA after the STA receives an association response. As shown in Fig. 9, the device may further include: a sending module 208 configured to send a sleep mode response to the STA, and a timing module 210 configured to time sleep time of the STA according to the extended values of the standard idle period. Meanwhile, the STA is also timed according to the acquired extended values of the maximum idle period and enters into a sleep mode.

After entering into a sleep mode, the STA only accepts a Beacon frame sent by the AP and sends no data frame to the AP while kept associated with the AP, detects whether or not the AP buffers a packet related to the STA, if so, exits the sleep mode and acquires a corresponding packet, otherwise, keeps the sleep state.

In a preferred implementation mode of embodiments of the present invention, an STA may send a Keep-alive frame to an AP before a configured extended values of a standard maximum idle period is reached to request for the association with the AP. Thus, the receiving module is further configured to receive the Keep-alive frame sent by the STA before the extended values of the standard maximum idle period is reached, in this case, the timing module is further configured to restart to time the sleep time of the STA according to the extended values of the standard maximum idle period. Preferably, the Keep-live frame is sent to the AP within a preset time, for example, 2 hours, prior to the reach of the extended values. In the preferred implementation mode, before the extended values is reached, the STA sends a Keep-alive frame to the AP within kept connected with the AP, thus avoiding the excessive power consumption due to the resending of an association request by the STA after the STA is disconnected with the AP at the moment of the reach of the configured maximum idle period.

In view of the implementation mode above, the association response sent from the AP to the STA may carry a flag for indicating types (protected Keep-alive frame or unprotected Keep-alive frame) of the Keep-alive frames supported by the AP, for example, for the IEEE 802.11v, the B0 bit in the 'Idle Options' sub-domain can be used to identify the types of the Keep-alive frames supported by the AP, if the value of the B0 bit 'Protected Keep-Alive Required' in the 'Idle Options' sub-domain is 0, then unprotected or protected Keep-alive frames are both allowed to be received, if the value of the B0 bit 'Protected Keep-Alive Required' in the 'Idle Options' sub-domain is 1, then only protected keep-alive frames are allowed to be received.

Thus, in a preferred implementation mode of embodiments of the present invention, the device may further include a judgment module configured to judge whether or not type of the Keep-alive frame received belongs to types of the Keep-alive frames supported by the AP. For example, if the AP only supports protected Keep-alive frames, then the judgment module judges whether or not the type of the Keep-alive frame received belongs to protected Keep-alive frames, the timing module is triggered to retime the sleep time of the STA according to the extended values of the standard maximum idle period, and if the received Keep-alive frame is an unprotected Keep-alive frame, then AP performs no retiming processing. The preferred implementation mode enhances the security of the connection between the STA and the AP.

Corresponding to the device for configuring a wireless local area network STA provided in an embodiment of the present invention, a method for configuring a wireless local area network STA is provided in an embodiment of the present invention, and the maximum idle period of the STA is configured in the above device or system.

Fig. 10 is a flowchart illustrating a method for configuring the maximum idle period of a wireless local area network station according to an embodiment of the present invention, and as shown in Fig. 10, the method may include the following Steps (Step S1002-Step S1008).

Step S1002: an AP receives an association request or a re-association request sent from a STA.

Step S1004: the AP judges whether or not the STA supports an extended values of a standard maximum idle period according to a preset flag in the received association request or re-association request, if so, executes Step S1006, otherwise, executes Step S1008.

In the above, the standard maximum idle period refers to the standard maximum idle period defined in the 802.11v.

Step S1006: the AP configures the maximum idle period of the STA within the standard maximum idle period or the extended values of the standard maximum idle period according to an instruction from an upper layer.

Step S1008: the AP configures the maximum idle period of the STA within the standard maximum idle period.

With the above embodiment of the present invention, an AP can configure the maximum idle period of an STA within a standard maximum idle period or an extended standard maximum idle period according to whether or not the STA supports an extended values of the standard maximum idle period and an instruction from an upper layer so that an STA needing to stand by for a long time can be associated with the AP for a longer time, thus preventing the STA from frequently sending a Keep-alive frame to the AP and consequentially saving the power of the STA and prolonging the service life of the battery of the STA, especially for an STA which needs to stand by for a long time and periodically sends data in a small amount or sends burst data, the embodiment of the present invention can effectively reduce power the consumption of the STA and prolong the service life of the battery of the STA.

Preferred implementation modes of Steps S1004-S1006 are described below, respectively.

### (1) Step S1004

According to their requirement on an idle period, STAs can be classified into STAs (e.g. electronic devices including mobile phone) requiring a relatively short idle period (that is, standard idle period) and STAs (e.g. STAs supporting the application of the Internet of Things) requiring an ultra-long idle period (that is, an extended values of the standard idle period). A preset flag for indicating whether or not an STA supports the extended values of the standard maximum idle period may be carried in an association request or a re-association request sent from the STA to an AP. In an embodiment of the present invention, an AP can judge whether or not the preset flag in the association request or re-association request is a preset value, if so, judges that the STA supports the extended values of the standard maximum idle period.

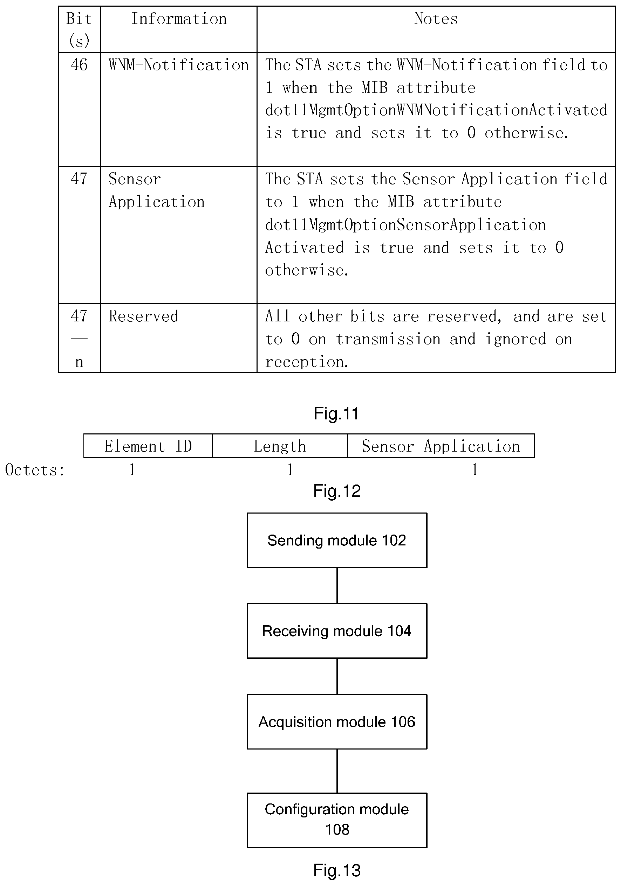

The AP judges whether or not the STA supports the extended values of the standard maximum idle period according to the preset flag carried in the association request or re-association request received. In a preferred embodiment, taking an STA of the Internet of Things which requires an ultra-long idle period as an example, for the IEEE 802.11v, a 'MIB attribute dot11 MgmtOptionSensor Application Activated' field may be added in PHY MIB, meanwhile, the Internet of Things application bit 'Sensor Application' (as shown in Fig. 11) is added at the forty-seventh reserved bit of an extended capability information element, if the 'MIB attribute dot11 MgmtOptionSensorApplication Activated' is 'true', then the bit position of the STA is '1', indicating that the STA supports the application of the Internet of Things (that is, the STA supports the extended values of the standard maximum idle period), and if the 'MIB attribute dot11 MgmtOptionSensorApplication Activated' is 'false', then the bit position of the STA is '0', indicating that the STA fails to support the application of the Internet of Things (that is, the STA fails to support the extended values of the standard maximum idle period). Alternatively, a capability information element may be added in an association request or re-association request defined in the 802.11v to indicate whether or not the STA supports the extended values of the standard maximum idle period, as shown in Fig. 12, when the newly added capability information element is 'true' (that is, supporting the extended values of the standard maximum idle period), then the value at the bit position is '1', otherwise, the value at the bit position is '0'.

To save cost, the preset flag occupying one bit is exemplified above, however, the present invention is not limited to this, and the preset flag may occupy a plurality of bits in the actual application. Moreover, in the actual application, it is not limited that a preset flag '1' represents the support of an STA to an extended values of a standard maximum idle period and a preset flag '0' represents the fail of the STA to support the extended values of the standard maximum idle period, it is also applicable to represent the support of the STA to the extended values of the standard maximum idle period using a preset flag '0' and the fail of the STA to support the extended values of the standard maximum idle period using a preset flag '1', and no limitation is given in embodiments of the present invention.

### (2) Step S1006

In a preferred implementation mode of Step S1006, if the STA supports the extended values of the standard maximum idle period, then the AP configures the maximum idle period of the STA to the standard maximum idle period or the extended values of the standard maximum idle period according to an instruction from an upper layer. For example, if the instruction from the upper layer instructs the AP to configure the extended values of the standard maximum idle period for the STA supporting the extended values of the standard maximum idle period, then the AP sends an association response or a re-association response indicating the extended values of the standard maximum idle period and the STA sets the maximum idle period thereof according to the extended values of the standard maximum idle period.

In a preferred implementation mode of embodiments of the present invention, the AP may indicate the extended values of the standard maximum idle period in the following two ways.

Way 1: a flag bit for indicating unit granularity of the standard maximum idle period is added in an association response or a re-association response defined in the 802.11v, and a corresponding unit granularity is set according to the indication of the flag bit to indicate the extended values of the standard maximum idle period. In this way, the standard maximum idle period is extended by increasing the unit granularity of the standard maximum idle period. Specifically, a flag bit may be set at the Reserved field in an association response or a re-association response to indicate the unit granularity of the standard maximum idle period, the flag bit is set to be a preset value when a maximum idle period is set for an STA. For example, when the flag bit is set to '1', the unit granularity of the standard maximum idle period is extended by an integral times, if the unit granularity is 1000TU per bit before the extension, then the unit granularity may be 10000TU per bit after the extension.

Way 2: length of a flag bit contained in an association response or a re-association response defined in the 802.11v for indicating the standard maximum idle period is increased, and the value of the flag bit is set as the extended values. Specifically, the flag bit for indicating the maximum idle period may be extended, for example, a field for indicating the maximum idle period may be added in an association response message.

By simply and conveniently realizing the extension of a preset standard maximum idle period, the methods described in the modes 1 and 2 realize the configuration of a larger maximum idle period for an STA and consequentially reduce the times the STA sends a Keep-live frame to an AP, reduce the power consumption of the STA and prolong the service life of the battery of the STA. However, embodiments of the present invention are not limited to the mentioned above, and the above two modes may be used synchronously in actual application, that is, the unit granularity and the length of the standard maximum idle period may be increased synchronously to extend the maximum idle period further.

In preferred embodiments of the present invention, after receiving an association response, the STA 1 may send a sleep mode request to the AP1, and accordingly, the AP1 may receive the sleep mode request sent by the STA 1 and send a sleep mode response to the STA. After configuring the maximum idle period of the STA within the extended values of the standard maximum idle period, the AP may further receive the sleep mode request sent by the STA after the STA receives the association response, send a sleep mode response to the STA and time the sleep time of the STA according to the extended values of the standard maximum idle period. Meanwhile, the STA is also timed according to the acquired extended values of the maximum idle period and enters into a sleep mode.

After entering into a sleep mode, the STA only accepts a Beacon frame sent by the AP and sends no data frame to the AP while kept associated with the AP, detects whether or not the AP buffers a packet related to the STA, if so, exits the sleep mode and acquires a corresponding packet, otherwise, keeps the sleep state.

In a preferred implementation mode of embodiments of the present invention, an STA may send a Keep-alive frame to an AP before the configured extended values of a standard maximum idle period is reached to request for the association with the AP. The AP receives the Keep-alive frame sent by the STA before the reach of the extended values and restarts to time the sleep time of the STA according to the extended values. In the preferred implementation mode, before the extended values is reached, the STA sends a Keep-alive frame to the AP to be kept connected with the AP, thus avoiding the excessive power consumption due to the resending of an association request by the STA which is disconnected with the AP at the moment of the reach of the configured maximum idle period.

In view of the preferred embodiments above, the association response sent from the AP to the STA may carry a bit for indicating types (protected Keep-alive frame or unprotected Keep-alive frame) of the Keep-alive frames supported by the AP, for example, for the IEEE 802.11v, the B0 bit in the 'Idle Options' sub-domain can be used to identify the types of the Keep-alive frames supported by the AP, if the value of the B0 bit 'Protected Keep-Alive Required' in the 'Idle Options' sub-domain is 0, then unprotected or protected Keep-alive frames are both allowed to be received, if the value of the B0 bit 'Protected Keep-Alive Required' in the 'Idle Options' sub-domain is 1, then only protected keep-alive frames are allowed to be received. Thus, in a preferred implementation mode of embodiments of the present invention, before retiming the sleep time of the STA according to the extended values, the AP may further judge whether or not the type of the Keep-alive frame received belongs to the types of the Keep-alive frames supported by the AP.

### 2. Device located at the side of the STA 1 for configuring the maximum idle period of a wireless local area network station STA

Fig. 13 is a block diagram illustrating structure of another device located at the side of the STA 1 in the above system for configuring the maximum idle period of a wireless local area network station according to an embodiment of the present invention, and as shown in Fig. 13, the device may include a sending module 102, a receiving module 104, an acquisition module 106 and a configuration module 108. The sending module 102 is configured to send an association request or a re-association request to the AP, wherein the association request or re-association request carries a preset flag indicating whether or not the STA supports an extended values of a standard maximum idle period, and the standard maximum idle period refers to the maximum idle period defined in the 802.11v. The receiving module 104 is configured to receive an association response or a re-association response sent from the AP. The acquisition module 106 is coupled with the receiving module 104 and is configured to acquire, according to the association response or re-association response, the maximum idle period configured by the AP for the STA, wherein if the preset flag indicates that the STA supports the extended values of the standard maximum idle period, then the maximum idle period acquired by the acquisition module is the standard maximum idle period or the extended values of the standard maximum idle period, and if the preset flag indicates that the STA fails to support the extended values of the standard maximum idle period, then the maximum idle period acquired by the acquisition module is the standard maximum idle period. The configuration module 108 is configured to configure the maximum idle period of the STA according to the maximum idle period acquired by the acquisition module 106.

With the device provided in the embodiment of the present invention, the STA can carry a flag for indicating whether or not the STA supports a standard maximum idle period in an association request or re-association request and acquires the standard maximum idle period or an extended values of the standard maximum idle period configured by the AP for the STA as the maximum idle period thereof according to an association response or re-association response received, in this way, an STA needing to stand by for an ultra-long time gets a longer idle period, and consequentially, the times the STA requests for the association with the AP is reduced, thus reducing the power consumption of the STA and prolonging the service life of the battery of the STA.

Corresponding to the device located at the side of the AP 2 provided in the above embodiment of the present invention, the configuration module 206 may extend the standard maximum idle period in two ways. Accordingly, in an embodiment of the present invention, if the preset flag indicates that the STA supports the extended maximum idle period, the acquisition module 106 may acquire the extended values of the standard maximum idle period in the following two ways.

Way 1: in the case where the AP extends the unit granularity of the standard maximum idle period, the acquisition module 106 may read a flag bit contained in the association response for indicating the unit granularity of the standard maximum idle period and acquires the maximum idle period configured by the AP for the STA according to the unit granularity and the standard maximum idle period.

Specifically, for the B1 bit (1 bit) of the Reserved field in the 'Idle Options' sub-domain of the IEEE 802.11v, a 'Ultra-Long BSS Idle Period Required' bit is added, the value of the B1 bit in the received association response is read, if the B1 bit is 0, the unit granularity of 1000TU per bit in the 'Max Idle Period' sub-domain of the original BSS Max Idle Period Element is kept unchanged, then the acquired maximum idle period is the standard maximum idle period; if the value of the read B1 bit is 1, then according to the appointed unit granularity of the 'Max Idle Period' sub-domain, an according maximum idle period greater than the standard idle period is configured for the STA.

Way 2: in the case where the AP extends the length of the standard maximum idle period, the acquisition module 106 may read a flag bit contained in the association response for indicating the extended maximum idle period in the association response and acquires the maximum idle period configured by the AP for the STA.

Specifically, the BSS Max Idle Period of the IEEE 802.11v may be extended in the following way (by extending the length of the maximum idle period): the 'Max Idle Period' sub-domain (1 byte in length) of the original BSS Max Idle Period Element is defined as eight high bits (MIP-H) of the maximum idle period value, the B1 bit to B(2-7) bits (2-7 bits) of the Reserved field in the 'Idle Options' sub-domain are defined as 2-7 low bits (MIP-L) of the maximum idle period, thereby increasing the bit amount of the maximum idle period from the original 8 bits to 10-15 bits. After receiving the association response, the STA reads the B1 bit to B (2-7) bit of the Reserved filed in the 'Idle Options' sub-domain and acquires the maximum idle period which is configured by the AP for the STA and greater than the standard maximum idle period.

Further, in a preferred implementation mode of embodiments of the present invention, the sending module 102 may carry the preset flag in the association request or re-association request by defining the preset flag in a capability information element newly added in the association request or the re-association request defined in the 802.11v to indicate whether or not the STA supports the extended standard maximum idle period, or by defining the preset flag at the Reserved bit of the extended capability information element of the association request or the re-association request defined in the 802.11v to indicate whether or not the STA supports the extended standard maximum idle period.

Corresponding to the device for configuring the maximum idle period of a wireless local area network STA provided in an embodiment of the present invention, another method for configuring a wireless local area network STA is provided in an embodiment of the present invention, and the maximum idle period of the STA is configured in the foregoing device or system.

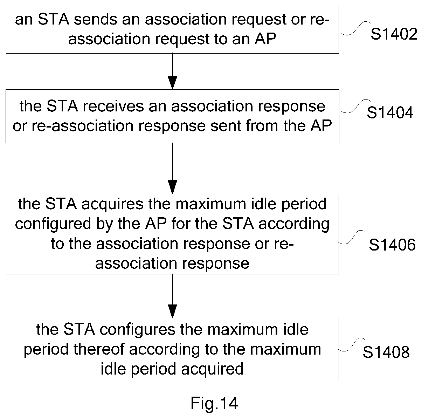

Fig. 14 is a flowchart illustrating another method for configuring the maximum idle period of a wireless local area network station according to an embodiment of the present invention, and as shown in Fig. 14, the method may include the following steps (step S1402-step S1408).

Step S1402: an STA sends an association request or a re-association request to an AP, wherein the association request or re-association request carries a preset flag for indicating whether or not the STA supports an extended values of a standard maximum idle period, wherein the standard maximum idle period refers to the standard maximum idle period defined in the 802.11v.

Step S1404: the STA receives an association response or a re-association response sent from the AP.

Step S1406: the STA acquires the maximum idle period configured by the AP for the STA according to the association response or re-association response, wherein if the preset flag indicates that the STA supports the extended values of the standard maximum idle period, then the maximum idle period acquired by the STA is the standard maximum idle period or the extended values of the standard maximum idle period, and if the preset flag indicates that the STA fails to support the extended values of the standard maximum idle period, then the maximum idle period acquired by the STA is the standard maximum idle period.

Step S1408: the STA configures the maximum idle period thereof according to the maximum idle period acquired.

With the embodiments of the present invention, an STA carries a flag for indicating whether or not the STA supports an extended values of a maximum idle period in an association request or re-association request and acquires the standard maximum idle period or an extended values of the standard maximum idle period configured by the AP for the STA as the maximum idle period thereof according to an association response or re-association response received, in this way, an STA needing to stand by for an ultra-long time gets a longer idle period, and consequentially, the times the STA requests for the association with the AP is reduced, thus reducing the power consumption of the STA and prolonging the service life of the battery of the STA.

Preferred implementation modes of steps S1402-S1406 are described below, respectively.

### (1) Step S1402

According to their requirement on an idle period, STAs can be classified into STAs (e.g. electronic devices including mobile phone) requiring a relatively short idle period and STAs (e.g. STAs supporting application of the Internet of Things) requiring an ultra-long idle period. A flag indicating whether or not an STA supports an extended values of a standard maximum idle period may be carried in an association request sent from the STA to an AP.

In a preferred embodiment of the present invention, taking an STA of the Internet of Things which requires an ultra-long idle period as an example, for the IEEE 802.11v, an 'MIB attribute dot11MgmtOptionSensor Application Activated' field may be added in PHY MIB, meanwhile, the Internet of Things application bit 'Sensor Application' is added at the fourth-seventh bit of an extended capability information element, if the 'MIB attribute dot11MgmtOptionSensorApplication Activated' is 'true', then the bit position of the STA is '1', indicating that the STA supports the application of the Internet of Things, and if the 'MIB attribute dot11MgmtOptionSensorApplication Activated' is 'false', then the bit position of the STA is '0', indicating that the STA fails to support the application of the Internet of Things, that is, the STA need not to stand by for an ultra-long time. Alternatively, the STA defines the preset flag in a capacity information element newly added in an association request or re-association request defined in the 802.11v to indicate whether or not the STA supports the extended values of the standard maximum idle period.

### (2) Step S1406

Corresponding to the aforementioned preferred embodiment of the present invention, the AP may extend the standard maximum idle period by increasing unit granularity of the standard maximum idle period or length of a flag bit contained in an association response or a re-association response for indicating the standard maximum idle period, and in a preferred embodiment of the present invention, the STA may acquire the maximum idle period configured by the AP for the STA in the two foregoing ways.

Way 1: the STA reads a flag bit contained in an association response or re-association response for indicating the unit granularity of the standard maximum idle period and acquires the maximum idle period configured by the AP for the STA according to the unit granularity and the standard maximum idle period. Specifically, a flag bit contained in the association response for indicating the unit granularity of the standard maximum idle period is read, for example, when the flag bit set as '1' is read, the unit granularity of the standard maximum idle period is extended by an integral times, if the unit granularity is 1000TU per bit before the extension, then the unit granularity may be 10000TU per bit after the extension.

Way 2: an extended flag bit contained in the association response or re-association response for indicating the maximum idle period is read, and the maximum idle period configured by the AP for the STA is acquired. For example, for the IEEE 802.11v, the STA, after receiving the association response, reads the B1 bit to B (2-7) bit of the Reserved filed in the 'Idle Options' sub-domain and acquires the maximum idle period which is configured by the AP for the STA and greater than the standard maximum idle period.

In preferred embodiments of the present invention, after receiving the association response, the STA 1 may send a sleep mode request to the AP1, and accordingly, the AP1 may receive the sleep mode request sent by the STA 1 and sends a sleep mode response to the STA. Meanwhile, the STA is timed according to the acquired extended values of the maximum idle period and enters into a sleep mode.

After entering into a sleep mode, the STA only accepts a Beacon frame sent by the AP and sends no data frame to the AP while kept associated with the AP, detects whether or not the AP buffers a packet related to the STA, if so, exits the sleep mode and acquires a corresponding packet, otherwise, keeps the sleep state.

In a preferred implementation mode of embodiments of the present invention, an STA may send a Keep-alive frame to an AP before the configured extended values of a standard maximum idle period is reached to request for the association with the AP. After receiving the Keep-alive frame sent by the STA, the AP retimes the sleep time of the STA according to the extended values. Meanwhile, the STA monitors the beacon frame sent by the AP within a preset period of time and restarts to time the sleep time of the STA according to the extended values. In the preferred implementation mode, before the extended values is reached, the STA sends a Keep-alive frame to the AP to be kept connected with the AP, thus avoiding the excessive power consumption due to the resending of an association request by the STA which is disconnected with the AP at the moment of the reach of the configured maximum idle period.

In view of the preferred embodiments above, the association response sent from the AP to the STA may carry a bit for indicating types (protected Keep-alive frame or unprotected Keep-alive frame) of the Keep-alive frames supported by the AP, for example, for the IEEE 802.11v, the B0 bit of the 'Idle Options' sub-domain can be used to identify the types of the Keep-alive frames supported by the AP, if the value of the B0 bit 'Protected Keep-Alive Required' in the 'Idle Options' sub-domain is 0, then unprotected or protected Keep-alive frames are both allowed to be received, if the value of the B0 bit 'Protected Keep-Alive Required' in the 'Idle Options' sub-domain is 1, then only protected keep-alive frames are allowed to be received. In a preferred implementation mode of embodiments of the present invention, the STA can determine the types of the Keep-alive frames supported by the AP according to a flag bit contained in the received association response for indicating the types of the Keep-alive frames supported by the AP.

The present invention is described below on the basis of specific embodiments.

According to specific embodiments of the present invention, by taking an STA supportive to the application of the Internet of Things as an example, an ultra-long standby power-saving mechanism supporting application of the Internet of Things in a wireless local area network is provided, the method for the MAC functions in IEEE 802.11ah standards enables a 802.11 system to distinguish an STA for conventional electronic devices including mobile telephone from an STA which may need an ultra-long idle period to support the application of the Internet of Things by extending the BSS Max Idle Period management mechanism of the 802.11v and extending attributes of an extended capability information element and a Management Information Base (MIB) so that the STA supporting the application of the Internet of Things can be associated with the AP longer than an idle period (longer than 18.64h), thereby saving more power and prolonging the service life of the battery of the STA.

In specific embodiments of the present invention, the method, the device and the system provided in the embodiments above are described by taking the application case of a household WiFi natural gas alarm and the application case of a household WiFi access control alarm as examples. The two scenarios are described below.

### Embodiment 1

In the embodiment, the application of the method, the device and the system for configuring the maximum idle period of a wireless local area network station STA provided in the foregoing embodiments in a WiFi natural gas alarm are described by taking the application of a household WiFi natural gas alarm as an example.

In the embodiment, a method of extending the standard maximum idle period by increasing unit granularity of the standard maximum idle period and a corresponding BSS Max Idle Period Management mechanism are used. After associated with an AP, the WiFi natural gas alarm (STA) enters into a sleep mode and appoints a maximum idle period of three days and 21 hours. During this period, the WiFi natural gas alarm periodically collects natural gas concentration data and compares the data collected with a preset threshold. If the data measured is not beyond the threshold, and the alarm finds that the AP buffers no packet related to the alarm during the process of periodically monitoring a Beacon frame, then the alarm keeps staying in a sleep mode. If the alarm finds that the AP buffers a packet (e.g. an update message) related to the alarm during the process of periodically monitoring a Beacon frame, then the alarm exists the sleep mode and sends a message to the AP to take back the related packet.

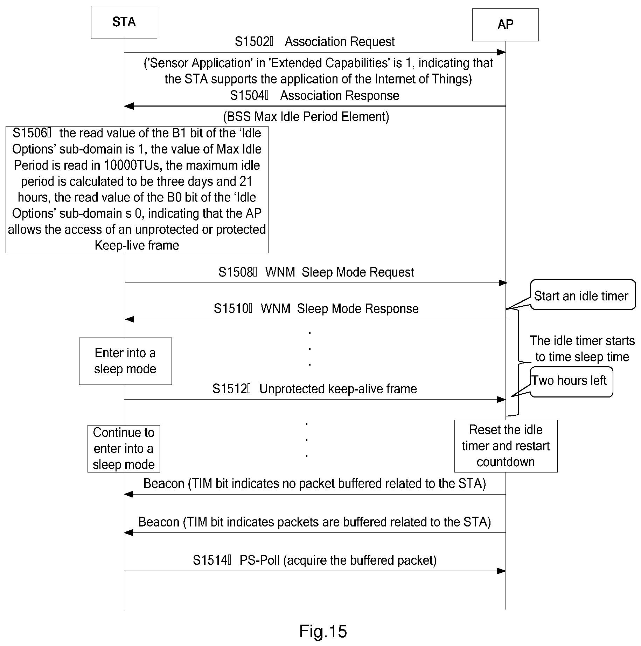

Fig. 15 is a flowchart illustrating a method for configuring the maximum idle period of a wireless local area network station STA according to the embodiment 1 of the present invention, and as shown in Fig. 15, the method may include the following Steps (Step S1502-step S1514).

Step S1502: the STA sends an association request an AP, the 'Sensor Application' carried in primitive of the association and located at the forty-seventh bit of an extended capability information element defined by 'Extended Capabilities' is 1, indicating that the STA supports the application of the Internet of Things.

Step S1504: after receiving the association request from the STA, the AP reads related information, wherein dot11MaxIdlePeriod is not 0, indicating use of a BSS Max Idle Period Management mechanism, the 'Sensor Application' at the forty-seventh bit of the extended capability information element defined by 'Extended Capabilities' is 1, indicating that the STA supports the application of the Internet of Things. The AP sends an association response to the STA, BSS Max Idle Period Element is included in the association response frame, and related information of the information element is as follows:

| | 1011010 | 00000011 | 1000000000000000 | Idle Options |
|---|---|---|---|---|
| Octets: | 1 | 1 | 2 | 1 |

**Idle Options:**

| | B0 | B1 | B2-B7 |
|---|---|---|---|
| | 0 | 1 | Reserved |
| Bits: | 1 | 1 | 6 |

In the above, it is appointed that if the value of the B1 bit 'Ultra-Long BSS Idle Period Required' of the sub-domain 'Idle Options' is 0, then the value of Max Idle Period is read in 1000TUs, if the value of the B1 bit 'Ultra-Long BSS Idle Period Required' is 1, then the value Max Idle Period is read in 10000TUs (that is, the unit is 104*1024us=10.24s).

Step S1506: after receiving the association response from the AP, the STA reads related information of BSS Max Idle Period Element, wherein if the value of the B1 bit 'Ultra-Long BSS Idle Period Required' of the 'Idle Options' sub-domain is 1, then the value '1000000000000000' (that is, Decimal Number: 32768) of Max Idle Period is read in 10000TUs (that is, the unit is, 104*1024us=10.24s), then the calculated maximum idle period is 32768*10.24s=335544.32s≈three days and 21 hours. Additionally, if the value of the B0 bit 'Protected Keep-Alive Required' of the 'Idle Options' sub-domain is 0, then it is allowed to receive an unprotected or protected Keep-live frame.

Step S1508: the STA sends a WNM sleep mode request to the AP.

Step S1510: the AP sends a WNM sleep mode response to the STA, the STA enters into a sleep mode, and the STA and the AP start an idle timer to set a countdown time to be three days and 21 hours. During this period, the AP keeps associated with the STA, and the STA sends no frames but periodically monitors a Beacon frames, finding that the AP buffers no packet related to the STA.

Step S1512: the STA sends an unprotected Keep-alive frame to the AP at the moment the counted-down time displayed on the idle timer is 2h. After receiving the unprotected Keep-alive frame sent from the STA, the AP resets the idle timer (sets the countdown time to be 'three days and 21 hours') to keep associated with the STA. The STA merely periodically monitors a Beacon frame but sends no frames.

Step S1514: the STA finds that the AP buffers a packet related to the STA during the process of periodically monitoring the Beacon frame, exits the sleep mode and sends a PS-Poll frame to the AP to acquire the packet buffered by the AP.

### Embodiment 2

In the embodiment, the application of the method, the device and the system for configuring the maximum idle period of a wireless local area network station STA provided in the foregoing embodiments in a WiFi access alarm are described by taking the application of a household WiFi access alarm as an example.

In the embodiment, a method of extending the standard maximum idle period by increasing length of a flag bit for indicating the standard maximum idle period and a corresponding BBS Max Idle Period Management mechanism are used.

For example, to leave for two weeks on business, the owner of a house starts a WiFi access alarm system and sets the maximum idle period of an access alarm (STA) to be three days and two hours. After the system is started, the access alarm (STA) is associated with an AP and enters into a sleep mode, and the maximum idle period is three days and two hours. During this period, the WiFi access alarm periodically senses whether or not the door is opened, if the door is always in a normal locked state and the alarm finds that the AP buffers no packet related to the alarm during the process of periodically monitoring a Beacon frame, then the WiFi access alarm keeps staying in the sleep mode and sends a keep-alive frame while kept in the sleep mode before the appointed maximum idle period is ended, if the WiFi access alarm fails to send a correct keep-alive frame as required before the appointed maximum idle period is ended, then the AP releases the association with the alarm. If the alarm received no periodic beacon frame from the AP, then the alarm initiatively initiates a re-association process and enters into a sleep mode according to the previously set maximum idle period. After finding the door is opened in a sensing process, the alarm ends the sleep mode quickly and sends an alarm message to the AP. After receiving the alarm message, the AP helps contact the owner of the house, the property management staff or a related department to take the next step.

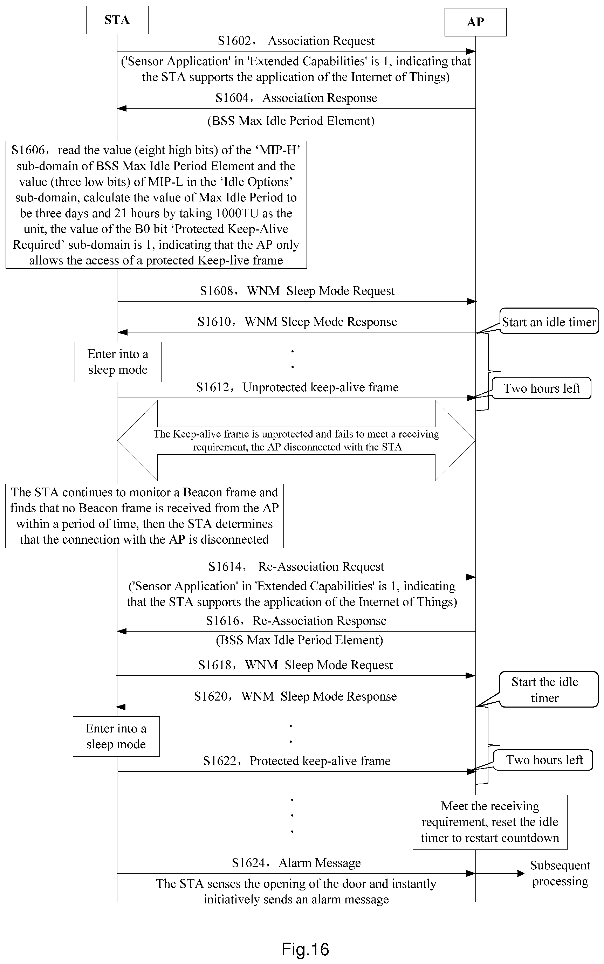

Fig. 16 is a flowchart illustrating a method for configuring the maximum idle period of a wireless local area network station STA according to an embodiment 2 of the present invention, and as shown in Fig. 16, the method may include the following steps (step S1602-step S1624).

Step S1602: the STA sends an association request an AP, the 'Sensor Application' carried in the primitive and located at the forty-seventh bit of an extended capability information element defined by 'Extended Capabilities' is 1, indicating that the STA supports the application of the Internet of Things.

Step S1604: after receiving the association request from the STA, the AP reads related information, wherein dot11MaxldlePeriod is not 0, indicating the use of a BSS Max Idle Period Management mechanism, the 'Sensor Application' at the fourth-seventh bit of the extended capability information element defined by 'Extended Capabilities' is 1, indicating that the STA supports the application of the Internet of Things. The AP sends an association Response to the STA, BSS Max Idle Period Element is included in the association response frame, and related information of the information element is as follows:

| | 1011010 | 00000011 | 1000000000000000 | Idle Options |
|---|---|---|---|---|
| Octets: | 1 | 1 | 2 | 1 |

**Idle Options:**

| | B0 | B1-B3 | B4-B7 |
|---|---|---|---|
| | 1 | 100 | Reserved |
| Bits: | 1 | 3 | 4 |

Step S1606: after receiving the association response from the AP, the STA reads related information in the BSS Max Idle Period Element, wherein the value (eight high bits) of the sub-domain MIP-H is 1000000000000000, and the value (three low bits) of MIP-L (B1-B3) in the 'Idle Options' sub-domain is 100, that is, the value of the Max Idle Period is 1000000000000000100 (Decimal Number: 262148), and the maximum idle period calculated in 1000TUs (calculated) is: 262148*1.024s=268439.552s≈three days and two hours. Additionally, if the value of the B0 bit 'Protected Keep-Alive Required' of the 'Idle Options' sub-domain is 1, then it is only allowed to receive a protected Keep-live frame.

Step S1608: the STA sends a WNM sleep mode request to the AP.

Step S1610: the AP sends a WNM sleep mode response to the STA, the STA enters into a sleep mode, and the STA and the AP start an idle timer to set a countdown time to be three days and two hours. During this period, the AP keeps associated with the STA, and the STA sends no frames but periodically monitors a Beacon frames, finding that the AP buffers no packet related to the STA.

Step S1612: the STA sends an unprotected Keep-alive frame to the AP at the moment the counted-down time displayed on the idle timer is 2h. After receiving the unprotected Keep-alive frame from the STA, the AP finds that the frame is an unprotected frame which fails to meet a receiving requirement and then disassociates with the STA.

Step S1614: the STA continues to periodically monitor a Beacon frame and finds that no Beacon frame is received from the AP within a period of time, the STA determines that the connection with the AP is disconnected and then initiatively initiates a re-association request.

Step S1616: after receiving the association request from the STA, the AP reads related information, wherein dot11MaxIdlePeriod is not 0, indicating the use of a BSS Max Idle Period Management mechanism, the 'Sensor Application' at the fourth-seventh bit of the extended capability information element defined by 'Extended Capabilities' is 1, indicating that the STA supports the application of the Internet of Things. The AP sends the STA a re-association request in which a BSS Max Idle Period Element is contained, the related information of the information element indicates that the maximum idle period of the STA is three days and two hours, and the AP is only allowed to receive a protected keep-alive frame.

Step S1618: the STA sends a WNM sleep mode request to the AP.

Step S1620: the AP sends a WNM sleep mode request to the STA, the STA enters into a sleep mode, and the STA and the AP start an idle timer to set a countdown time to be three days and two hours. During this period, the AP keeps associated with the STA, and the STA sends no frames but periodically monitors a Beacon frames, finding that the AP buffers no packet related to the STA.

Step S1622: the STA sends a protected Keep-alive frame to the AP at the moment the counted-down time displayed on the idle timer is 2h. After receiving the protected Keep-alive frame sent from the STA, the AP confirms that the frame meets a receiving requirement and resets the idle timer (sets the countdown time to be 'three days and two hours') to keep associated with the STA. The STA merely periodically monitors a Beacon frame and sends no frames.

Step S1624: the STA senses the opening of the door, ends the sleep mode and instantly initiatively sends an alarm message to the AP. After receiving the alarm message, the AP carries out the next processing.

It can be sent from the above that the present invention realizes the following technical effect: an AP can configure a standard maximum idle period or an extended standard maximum idle period for an STA according to whether or not the STA supports an extended values of the standard maximum idle period so that an STA needing to stand by for a long time can be associated with the AP for a longer time, thus preventing the STA from frequently sending a Keep-alive frame to the AP and consequentially saving the power of the STA and prolonging the service life of the battery of the STA, especially for an STA which needs to stand by for a long time and periodically sends data in a small amount or sends burst data, the present invention can effectively reduce the power consumption of the STA and prolong the service life of the battery of the STA. Further, for an STA for the application of the Internet of Things needing an ultra-long idle period, by extending the standard maximum idle period, the present invention effectively reduces the power consumption of the STA and prolongs the service life of the battery of the STA.

Apparently, it should be appreciated by those skilled in the art that each module or step described in the present invention can be realized by a universal computer and that the modules or steps may be integrated on a single computer or distributed on a network consisting of a plurality of computers, optionally, the modules or steps may be realized by executable program codes so that the modules or steps can be stored in a memory to be executed by a computer, and in some cases, the steps shown or described herein can be executed in a sequence different from this presented herein, or the modules or steps are formed into integrated circuit modules, or several of the modules or steps are formed into integrated circuit modules. Therefore, the present invention is not limited to the combination of specific hardware and software.

## Claims

1. A method for configuring the maximum idle period of a wireless local area network station, comprising:
receiving, by an access point, AP, an association request or a re-association request sent from a wireless local area network station, STA; the method being further **characterized by**
determining, by the AP, whether or not the STA supports an extended values of a maximum idle period defined in the IEEE 802.11v according to a preset flag in the association request or re-association request, wherein the extended values is greater than the maximum idle period; and
if the STA fails to support the extended values, configuring, by the AP, the maximum idle period of the STA within the maximum idle period; and if the STA supports the extended values, configuring, by the AP, the maximum idle period of the STA within the maximum idle period or the extended values of the maximum idle period according to an instruction from an upper layer;
wherein the step that the AP configures the maximum idle period of the STA within the extended values of the maximum idle period according to an instruction from an upper layer comprises that: if the instruction from the upper layer instructs the AP to configure the extended values of the maximum idle period for the STA supporting the extended values of the maximum idle period, then the AP sends an association response or a re-association response indicating the extended values of the maximum idle period; and the STA sets the maximum idle period thereof according to the extended values of the maximum idle period.

2. The method according to claim 1, **characterized in that** the preset flag is defined by a capacity information element newly added in the association request or the re-association request defined in the IEEE 802.11v to indicate whether or not the STA supports the extended values of the maximum idle period.

3. The method according to claim 1, **characterized in that** the preset flag is defined by the Reserved bit of the extended capability information element of the association request or the re-association request defined in the IEEE 802.11v to indicate whether or not the STA supports the extended values of the maximum idle period.

4. The method according to any one of claims 1 to 3, wherein the step that the AP determines whether or not the STA supports the extended values of the maximum idle period according to the preset flag in the received association request comprises that:
the AP determines whether or not the preset flag is a preset value, if so, determines that the STA supports the extended values of the maximum idle period.

5. A method for configuring the maximum idle period of a wireless local area network station, **characterized by** comprising the following steps that:
sending, by a station (STA), an association request or a re-association request to an access point (AP), wherein the association request or re-association request carries a preset flag indicating whether or not the STA supports an extended values of a maximum idle period defined in the IEEE 802.11v, wherein the extended values is greater than the maximum idle period;
receiving, by the STA, an association response or a re-association response sent from the AP; and
acquiring, by the STA, according to the association response or re-association response, the maximum idle period configured by the AP for the STA, wherein if the preset flag indicates that the STA supports the extended values of the maximum idle period, then the maximum idle period acquired by the STA is the maximum idle period or the extended values of the maximum idle period, and if the preset flag indicates that the STA fails to support the extended values of the maximum idle period, then the maximum idle period acquired by the STA is the maximum idle period; and
configuring, by the STA, the maximum idle period for the STA according to the maximum idle period acquired.

6. The method according to claim 5, **characterized in that** the STA carries the preset flag in the association request or re-association request in the following way:
the STA defines the preset flag in a capability information element newly added in the association request or re-association request defined in the IEEE 802.11v to indicate whether or not the STA supports the extended values of the maximum idle period, or
the STA defines the preset flag at a Reserved bit of an extended capability information element of the association request or re-association request defined in the IEEE 802.11v to indicate whether or not the STA supports the extended values of the maximum idle period.

7. A device for configuring the maximum idle period of a wireless local area network station, comprising:
a receiving module (202) configured to receive an association request or a re-association request sent from a station (STA); the device being further **characterized by** comprising
a determination module (204) configured to determine whether or not the STA supports an extended values of a maximum idle period defined in the IEEE 802.11v according to a preset flag in the received association request or re-association request, wherein the extended values is greater than the maximum idle period; and
a configuration module (206) configured to configure the maximum idle period of the STA within the maximum idle period if the STA fails to support the extended values of the maximum idle period or configure the maximum idle period of the STA within the maximum idle period or the extended values of the maximum idle period according to an instruction from an upper layer if the STA supports the extended values of the maximum idle period;
wherein the configuration module (206) is further configured to, if the instruction from the upper layer instructs to configure the extended values of the maximum idle period for the STA supporting the extended values of the maximum idle period, send an association response or a re-association response indicating the extended values of the maximum idle period so as to enable the STA set the maximum idle period thereof according to the extended values of the maximum idle period.

8. The device according to claim 9, **characterized in that** the preset flag is defined by a capability information element newly added in the association request or re-association request defined in the IEEE 802.11v to indicate whether or not the STA supports the extended values of the maximum idle period, or the preset flag is defined by the Reserved bit of the extended capability information element of the association request or re-association request defined in the IEEE 802.11v to indicate whether or not the STA supports the extended values of the maximum idle period.

9. A device located in an STA for configuring the maximum idle period of a wireless local area network station, **characterized by** comprising:
a sending module (102) configured to send an association request or a re-association request to an Access Point (AP), wherein the association request or re-association request carries a preset flag indicating whether or not a station (STA) supports an extended values of a maximum idle period defined in the IEEE 802.11v, wherein the extended values is greater than the maximum idle period;
a receiving module (104) configured to receive an association response or a re-association response sent from the AP;
an acquisition module (106) configured to acquire, according to the association response or re-association response, the maximum idle period configured by the AP for the STA, wherein if the preset flag indicates that the STA supports the extended values of the maximum idle period, then the maximum idle period acquired by the acquisition module is the maximum idle period or the extended values of the maximum idle period, and if the preset flag indicates that the STA fails to support the extended values of the maximum idle period, then the maximum idle period acquired by the acquisition module is the maximum idle period; and
a configuration module (108) configured to configure the maximum idle period of the STA according to the maximum idle period acquired by the acquisition module.

10. The device according to claim 9, **characterized in that** the sending module (102) carries the preset flag in the association request or re-association request in the following way:
the sending module (102) defines the preset flag in a capability information element newly added in the association request or the re-association request defined in the IEEE 802.11v to indicate whether or not the STA supports the extended values of the maximum idle period, or
the sending module (102) defines the preset flag at the Reserved bit of the extended capability information element of the association request or the re-association request defined in the IEEE 802.11v to indicate whether or not the STA supports the extended maximum idle period.

11. A system for configuring the maximum idle period of a wireless local area network station, **characterized by** comprising: a station, STA, (1) and an Access Point, AP, (2) wherein
the STA (1) includes the device claimed in any one of claims 9 to 10; and
the AP (2) includes the device claimed in any one of claims 7 to 8.

## Patentansprüche

1. Verfahren zum Konfigurieren der maximalen Leerlaufperiode einer drahtlosen lokalen Netzwerkstation, umfassend:
Empfangen, durch einen Zugangspunkt, AP, einer Zuordnungsanforderung oder einer Neuzuordnungsanforderung, die von einer drahtlosen lokalen Netzwerkstation, STA, gesendet wird;
wobei das Verfahren des Weiteren **gekennzeichnet ist durch**
Bestimmen, **durch** den AP, ob die STA erweiterte Werte der maximalen Leerlaufperiode, definiert in IEEE 802.11 v, unterstützt oder nicht, entsprechend einer voreingestellten Marke in der Zuordnungsanforderung oder Neuzuordnungsanforderung, wobei die erweiterten Werte größer als die maximale Leerlaufperiode sind; und
wenn die STA die erweiterten Werte nicht unterstützt, Konfigurieren, **durch** den AP, der maximalen Leerlaufperiode der STA innerhalb der maximalen Leerlaufperiode; und wenn die STA die erweiterten Werte unterstützt, Konfigurieren, **durch** den AP, der maximalen der Periode der STA innerhalb der maximalen Periode oder der erweiterten Werte der maximalen Leerlaufperiode entsprechend einem Befehl von einer oberen Schicht;
wobei der Schritt, in dem der AP die maximale Leerlaufperiode der STA innerhalb der erweiterten Werte der maximalen der Leerlaufperiode gemäß einem Befehl von einer oberen Schicht konfiguriert, umfasst, dass: wenn der Befehl von der oberen Schicht den AP dazu anweist, die erweiterten Werte der maximalen Leerlaufperiode für die STA, welche die erweiterten Werte der maximalen Leerlaufperiode unterstützt, zu konfigurieren, der AP dann eine Zuordnungsantwort oder eine Neuzuordnungsantwort sendet, welche die erweiterten Werte der maximalen Leerlaufperiode anzeigt; und die STA ihre maximale Leerlaufperiode entsprechend den erweiterten Werten der maximalen Leerlaufperiode einstellt.

2. Verfahren nach Anspruch 1, **dadurch gekennzeichnet, dass** die voreingestellte Marke durch ein Kapazitätsinformationselement definiert ist, das in der Zuordnungsanforderung oder der Neuzuordnungsanforderung, wie in IEEE 802.11v definiert, neu hinzugefügt wurde, um anzuzeigen, ob die STA die erweiterten Werte der maximalen Leerlaufperiode unterstützt oder nicht.

3. Verfahren nach Anspruch 1, **dadurch gekennzeichnet, dass** die voreingestellte Marke durch das reservierte Bit des erweiterten Kapazitätsinformationselements der Zuordnungsanforderung oder der Neuzuordnungsanforderung, wie in IEEE 802.11v definiert, definiert ist, um anzuzeigen, ob die STA die erweiterten Werte der maximalen Leerlaufperiode unterstützt oder nicht.

4. Verfahren nach einem der Ansprüche 1 bis 3, wobei der Schritt, in dem der AP bestimmt, ob die STA die erweiterten Werte der maximalen Leerlaufperiode unterstützt oder nicht, entsprechend der voreingestellten Marke in der empfangenen Zuordnungsanforderung, umfasst, dass:
der AP bestimmt, ob die voreingestellte Marke ein voreingestellter Wert ist oder nicht, und wenn ja, bestimmt, dass die STA die erweiterten Werte der maximalen der Leerlaufperiode unterstützt.

5. Verfahren zum Konfigurieren der maximalen Leerlaufperiode einer drahtlosen lokalen Netzwerkstation, **dadurch gekennzeichnet, dass** es die folgenden Schritte umfasst:
Senden, durch eine Station (STA), einer Zuordnungsanforderung oder einer Neuzuordnungsanforderung an einen Zugangspunkt (AP), wobei die Zuordnungsanforderung oder die Neuzuordnungsanforderung eine voreingestellte Marke tragen, die anzeigt, ob die STA die erweiterten Werte einer maximalen Leerlaufperiode unterstützt, wie in IEEE 802.11v definiert, wobei die erweiterten Werte größer als die maximale Leerlaufperiode sind;
Empfangen, durch die STA, einer Zuordnungsantwort oder einer Neuzuordnungsantwort, die von dem AP gesendet wird; und
Abrufen, durch die STA, entsprechend der Zuordnungsantwort oder der Neuzuordnungsantwort, der maximalen Leerlaufperiode, die durch den AP für die STA konfiguriert ist, wobei, wenn die voreingestellte Marke anzeigt, dass die STA die erweiterten Werte der maximalen Leerlaufperiode unterstützt, die von der STA abgerufene maximale Leerlaufperiode dann die maximale Leerlaufperiode oder die erweiterten Werte der maximalen Leerlaufperiode sind, und wenn die voreingestellte Marke anzeigt, dass die STA die erweiterten Werte der maximalen Leerlaufperiode nicht unterstützt, die von der STA abgerufene maximale Leerlaufperiode die maximale Leerlaufperiode ist; und
Konfigurieren, durch die STA, der maximalen Leerlaufperiode für die STA entsprechend der abgerufenen maximalen Leerlaufperiode.

6. Verfahren nach Anspruch 5, **dadurch gekennzeichnet, dass** die STA die voreingestellte Marke in der Zuordnungsanforderung oder der Neuzuordnungsanforderung auf folgende Weise trägt:
die STA definiert die voreingestellte Marke in einem Kapazitätsinformationselement, das in der Zuordnungsanforderung oder Neuzuordnungsanforderung, wie in IEEE 802.11v definiert, neu hinzugefügt wird, um anzuzeigen, ob die STA die erweiterten Werte der maximalen Leerlaufperiode unterstützt oder nicht, oder
die STA definiert die voreingestellte Marke an einem reservierten Bit eines erweiterten Kapazitätsinformationselements der Zuordnungsanforderung oder Neuzuordnungsanforderung, wie in IEEE 802.11v definiert, um anzuzeigen, ob die STA die erweiterten Werte der maximalen Leerlaufperiode unterstützt oder nicht.

7. Vorrichtung zum Konfigurieren der maximalen Leerlaufperiode einer drahtlosen lokalen Netzwerkstation, umfassend:
ein Empfangsmodul (202), das dazu konfiguriert ist, eine Zuordnungsanforderung oder eine Neuzuordnungsanforderung zu empfangen, die von einer Station (STA) gesendet wird;
wobei die Vorrichtung des Weiteren **dadurch gekennzeichnet ist, dass** sie umfasst:
ein Bestimmungsmodul (204), das zum Bestimmen konfiguriert ist, ob die STA erweiterte Werte einer maximalen Leerlaufperiode, definiert in IEEE 802v, unterstützt oder nicht, entsprechend einer voreingestellten Marke in der empfangenen Zuordnungsanforderung oder Neuzuordnungsanforderung, wobei die erweiterten Werte größer als die maximale Leerlaufperiode sind; und
ein Konfigurationsmodul (206), das dazu konfiguriert ist, die maximale Leerlaufperiode der STA innerhalb der maximalen Leerlaufperiode zu konfigurieren, wenn die STA die erweiterten Werte der maximalen Leerlaufperiode nicht unterstützt, oder die maximale Leerlaufperiode der STA innerhalb der maximalen Leerlaufperiode oder der erweiterten Werte der maximalen Leerlaufperiode entsprechend einem Befehl von einer oberen Schicht zu konfigurieren, wenn die STA die erweiterten Werte der maximalen Leerlaufperiode unterstützt;
wobei das Konfigurationsmodul (206) des Weiteren dazu konfiguriert ist, wenn der Befehl von der oberen Schicht anweist, die erweiterten Werte der maximalen Leerlaufperiode für die STA, welche die erweiterten Werte der maximalen Leerlaufperiode unterstützt, eine Zuordnungsantwort oder eine Neuzuordnungsantwort zu senden, welche die erweiterten Werte der maximalen Leerlaufperiode anzeigt, um es der STA zu ermöglichen, ihre maximale Leerlaufperiode entsprechend den erweiterten Werten der maximalen Leerlaufperiode einzustellen.

8. Vorrichtung nach Anspruch 9, **dadurch gekennzeichnet, dass** die voreingestellte Marke durch ein Kapazitätsinformationselement definiert ist, das in der Zuordnungsanforderung oder Neuzuordnungsanforderung, wie in IEEE 802.11v definiert, kürzlich hinzugefügt wurde, um anzuzeigen, ob die STA die erweiterten Werte der maximalen Leerlaufperiode unterstützt oder nicht, oder die voreingestellte Marke durch das reservierte Bit des erweiterten Kapazitätsinformationselements der Zuordnungsanforderung oder Neuzuordnungsanforderung definiert ist, wie in IEEE 802.11v definiert, um anzuzeigen, ob die STA die erweiterten Werte der maximalen Leerlaufperiode unterstützt oder nicht.

9. Vorrichtung, die sich in einer STA befindet, zum Konfigurieren der maximalen Leerlaufperiode einer drahtlosen lokalen Netzwerkstation, **dadurch gekennzeichnet, dass** sie umfasst:
ein Sendemodul (102), konfiguriert zum Senden einer Zuordnungsanforderung oder einer Neuzuordnungsanforderung an einen Zugangspunkt (AP), wobei die Zuordnungsanforderung oder die Neuzuordnungsanforderung eine voreingestellte Marke tragen, die anzeigt, ob eine Station (STA) erweiterte Werte einer maximalen Leerlaufperiode unterstützt, wie in IEEE 802.11v definiert, wobei die erweiterten Werte größer als die maximale Leerlaufperiode sind;
ein Empfangsmodul (104), das dazu konfiguriert ist, eine Zuordnungsantwort oder eine Neuzuordnungsantwort zu empfangen, die von dem AP gesendet wird;
ein Abrufmodul (106), das dazu konfiguriert ist, entsprechend der Zuordnungsantwort oder der Neuzuordnungsantwort die maximale Leerlaufperiode abzurufen, die durch den AP für die STA konfiguriert ist, wobei, wenn die voreingestellte Marke anzeigt, dass die STA die erweiterten Werte der maximalen Leerlaufperiode unterstützt, die von dem Abrufmodul abgerufene maximale Leerlaufperiode dann die maximale Leerlaufperiode oder die erweiterten Werte der maximalen Leerlaufperiode sind, und wenn die voreingestellte Marke anzeigt, dass die STA die erweiterten Werte der maximalen Leerlaufperiode nicht unterstützt, die von dem Abrufmodul abgerufene maximale Leerlaufperiode die maximale Leerlaufperiode ist; und
ein Konfigurationsmodul (108), das dazu konfiguriert ist, die maximale Leerlaufperiode der STA entsprechend der maximalen Leerlaufperiode zu konfigurieren, die durch das Abrufmodul abgerufen wird.

10. Vorrichtung nach Anspruch 9, **dadurch gekennzeichnet, dass** das Sendemodul (102) die voreingestellte Marke in der Zuordnungsanforderung oder der Neuzuordnungsanforderung auf folgende Weise trägt:
das Sendemodul (102) definiert die voreingestellte Marke in einem Kapazitätsinformationselement, das in der Zuordnungsanforderung oder der Neuzuordnungsanforderung, wie in IEEE 802.11v definiert, neu hinzugefügt wird, um anzuzeigen, ob die STA die erweiterten Werte der maximalen Leerlaufperiode unterstützt oder nicht, oder
das Sendemodul (102) definiert die voreingestellte Marke an dem reservierten Bit des erweiterten Kapazitätsinformationselements der Zuordnungsanforderung oder der Neuzuordnungsanforderung, wie in IEEE 802.11v definiert, um anzuzeigen, ob die STA die erweiterte maximale Leerlaufperiode unterstützt oder nicht.

11. System zum Konfigurieren der maximalen Leerlaufperiode einer drahtlosen lokalen Netzwerkstation, **dadurch gekennzeichnet, dass** es umfasst: eine Station, STA, (1) und einen Zugangspunkt, AP, (2), wobei
die STA (1) die Vorrichtung nach einem der Ansprüche 9 bis 10 beinhaltet; und
der AP (2) die Vorrichtung nach einem der Ansprüche 7 bis 8 beinhaltet.

## Revendications

1. Procédé de configuration de la période d'inactivité maximale d'une station de réseau local sans fil, comprenant :
la réception, par un point d'accès, AP, d'une demande d'association ou d'une demande de réassociation envoyée à partir d'une station de réseau local sans fil, STA ;
le procédé étant **caractérisé en outre par**
détermination, par l'AP, si la STA supporte ou non une valeur étendue d'une période d'inactivité maximale définie dans l'IEEE 802.11v en fonction d'un indicateur prédéfini dans la demande d'association ou la demande de réassociation, dans lequel la valeur étendue est supérieure à la période d'inactivité maximale ; et
si la STA ne supporte pas de la valeur étendue, la configuration, par l'AP, de la période d'inactivité maximale de la STA dans la période d'inactivité maximale ; et si la STA supporte la valeur étendue, la configuration, par l'AP, de période d'inactivité maximale de la STA dans la période d'inactivité maximale ou la valeur étendue de la période d'inactivité maximale en fonction d'une instruction provenant d'une couche supérieure ;
dans lequel l'étape dans laquelle l'AP configure la période d'inactivité maximale de la STA dans la valeur étendue de la période d'inactivité maximale en fonction d'une instruction provenant d'une couche supérieure comprend que : si l'instruction provenant de la couche supérieure donne instruction à l'AP de configurer la valeur étendue de la période d'inactivité maximale pour la STA supportant la valeur étendue de la période d'inactivité maximale, alors l'AP envoie une réponse d'association ou une réponse de réassociation indiquant la valeur étendue de la période d'inactivité maximale ; et la STA fixe la période d'inactivité maximale de celui-ci en fonction de la valeur étendue de la période d'inactivité maximale.

2. Procédé selon la revendication 1, **caractérisé en ce que** l'indicateur prédéfini est défini par un élément d'informations de capacité nouvellement ajouté dans la demande d'association ou la demande de réassociation définie dans l'IEEE 802.11v pour indiquer si la STA supporte ou non la valeur étendue de la période d'inactivité maximale.

3. Procédé selon la revendication 1, **caractérisé en ce que** l'indicateur prédéfini est défini par le bit réservé de l'élément d'informations de capacité étendue de la demande d'association ou la demande de réassociation définie dans l'IEEE 802.11v pour indiquer si la STA supporte ou non la valeur étendue de la période d'inactivité maximale.

4. Procédé selon l'une quelconque des revendications 1 à 3, dans lequel l'étape dans laquelle l'AP détermine si la STA supporte ou non la valeur étendue de la période d'inactivité maximale en fonction de l'indicateur prédéfini dans la demande d'association reçue comprend que :
l'AP détermine si l'indicateur prédéfini est ou non une valeur prédéfinie, dans l'affirmative, détermine que la STA supporte la valeur étendue de la période d'inactivité maximale.

5. Procédé de configuration de la période d'inactivité maximale d'une station de réseau local sans fil, **caractérisé en ce qu'**il comprend les étapes suivantes :
l'envoi, par une station (STA), d'une demande d'association ou d'une demande de réassociation à un point d'accès (AP), dans lequel la demande d'association ou la demande de réassociation transporte un indicateur prédéfini indiquant si la STA supporte ou non une valeur étendue d'une période d'inactivité maximale définie dans l'IEEE 802.11v, dans lequel la valeur étendue est supérieure à la période d'inactivité maximale ;
la réception, par la STA, d'une réponse d'association ou d'une réponse de réassociation transmise à partir de l'AP ; et
l'acquisition, par la STA, en fonction de la réponse d'association ou de la réponse de réassociation, de la période d'inactivité maximale configurée par l'AP pour la STA, dans lequel si l'indicateur prédéfini indique que la STA supporte la valeur étendue de la période d'inactivité maximale, alors la période d'inactivité maximale acquise par la STA est la période d'inactivité maximale ou la valeur étendue de la période d'inactivité maximale, et si l'indicateur prédéfini indique que la STA ne supporte pas la valeur étendue de la période d'inactivité maximale, alors la période d'inactivité maximale acquise par la STA est la période d'inactivité maximale ; et
la configuration, par la STA, de la période d'inactivité maximale pour la STA en fonction de la période d'inactivité maximale acquise.

6. Procédé selon la revendication 5, **caractérisé en ce que** la STA transporte l'indicateur prédéfini dans la demande d'association ou la demande de réassociation de la manière suivante :
la STA définit l'indicateur prédéfini dans un élément d'informations de capacité nouvellement ajouté dans la demande d'association ou la demande de réassociation définie dans l'IEEE 802.11v pour indiquer si la STA supporte ou non la valeur étendue de la période d'inactivité maximale, ou
la STA définit l'indicateur prédéfini au niveau d'un bit réservé d'un élément d'informations de capacité étendue de la demande d'association ou la demande de réassociation définie dans l'IEEE 802.11v pour indiquer si la STA supporte ou non la valeur étendue de la période d'inactivité maximale.

7. Dispositif pour configurer la période d'inactivité maximale d'une station de réseau local sans fil, comprenant :
un module de réception (202) configuré pour recevoir une demande d'association ou d'une demande de réassociation envoyée à partir d'une station (STA) ;
le dispositif étant **caractérisé en outre en ce qu'**il comprend
un module de détermination (204) configuré pour déterminer si la STA supporte ou non une valeur étendue d'une période d'inactivité maximale définie dans l'IEEE 802.11v en fonction d'un indicateur prédéfini dans la demande d'association ou la demande de réassociation reçue, dans lequel la valeur étendue est supérieure à la période d'inactivité maximale ; et
un module de configuration (206) configuré pour configurer la période d'inactivité maximale de la STA dans la période d'inactivité maximale si la STA ne supporte pas la valeur étendue de la période d'inactivité maximale ou configurer la période d'inactivité maximale de la STA dans la période d'inactivité maximale ou la valeur étendue de la période d'inactivité maximale en fonction d'une instruction provenant d'une couche supérieure si la STA supporte la valeur étendue de la période d'inactivité maximale ;
dans lequel le module de configuration (206) est configuré en outre pour, si l'instruction provenant de la couche supérieure donne instruction de configurer la valeur étendue de la période d'inactivité maximale pour la STA supportant la valeur étendue de la période d'inactivité maximale, envoyer une réponse d'association ou une réponse de réassociation indiquant la valeur étendue de la période d'inactivité maximale de manière à permettre à la STA de fixer la période d'inactivité maximale de celui-ci en fonction de la valeur étendue de la période d'inactivité maximale.

8. Dispositif selon la revendication 9, **caractérisé en ce que** l'indicateur prédéfini est défini par un élément d'informations de capacité nouvellement ajouté dans la demande d'association ou la demande de réassociation définie dans l'IEEE 802.11v pour indiquer si la STA supporte ou non la valeur étendue de la période d'inactivité maximale, ou l'indicateur prédéfini est défini par le bit réservé de l'élément d'informations de capacité étendue de la demande d'association ou la demande de réassociation définie dans l'IEEE 802.11v pour indiquer si la STA supporte ou non la valeur étendue de la période d'inactivité maximale.

9. Dispositif situé dans une STA pour configurer la période d'inactivité maximale d'une station de réseau local sans fil, **caractérisé en ce qu'**il comprend :
un module de transmission (102) configuré pour envoyer une demande d'association ou une demande de réassociation à un point d'accès (AP), dans lequel la demande d'association ou la demande de réassociation transporte un indicateur prédéfini indiquant si une station (STA) supporte ou non une valeur étendue d'une période d'inactivité maximale définie dans l'IEEE 802.11v, dans lequel la valeur étendue est supérieure à la période d'inactivité maximale ;
un module de réception (104) configuré pour recevoir une réponse d'association ou une réponse de réassociation transmise à partir de l'AP ;
un module d'acquisition (106) configuré pour acquérir, en fonction de la réponse d'association ou de la réponse de réassociation, la période d'inactivité maximale configurée par l'AP pour la STA, dans lequel si l'indicateur prédéfini indique que la STA supporte la valeur étendue de la période d'inactivité maximale, alors la période d'inactivité maximale acquise par le module d'acquisition est la période d'inactivité maximale ou la valeur étendue de la période d'inactivité maximale, et si l'indicateur prédéfini indique que la STA ne supporte pas la valeur étendue de la période d'inactivité maximale, alors la période d'inactivité maximale acquise par le module d'acquisition est la période d'inactivité maximale ; et
un module de configuration (108) configuré pour configurer la période d'inactivité maximale pour la STA en fonction de la période d'inactivité maximale acquise par le module d'acquisition.

10. Dispositif selon la revendication 9, **caractérisé en ce que** le module de transmission (102) transporte l'indicateur prédéfini dans la demande d'association ou la demande de réassociation de la manière suivante :
le module de transmission (102) définit l'indicateur prédéfini dans un élément d'informations de capacité nouvellement ajouté dans la demande d'association ou la demande de réassociation définie dans l'IEEE 802.11v pour indiquer si la STA supporte ou non la valeur étendue de la période d'inactivité maximale, ou
le module de transmission (102) définit l'indicateur prédéfini au niveau du bit réservé de l'élément d'informations de capacité étendue de la demande d'association ou la demande de réassociation définie dans l'IEEE 802.11v pour indiquer si la STA supporte ou non la période d'inactivité maximale étendue.

11. Système pour configurer la période d'inactivité maximale d'une station de réseau local sans fil, **caractérisé en ce qu'**il comprend : une station, STA, (1) et un point d'accès, AP, (2) dans lequel
la STA (1) comprend le dispositif selon l'une quelconque des revendications 9 à 10 ; et
l'AP (2) comprend le dispositif selon l'une quelconque des revendications 7 à 8.
